(19) Europäisches Patentamt
European Patent Office
Office européen des brevets

(11) **EP 4 691 633 A1**

(12) **EUROPEAN PATENT APPLICATION**
published in accordance with Art. 153(4) EPC

(43) Date of publication:
**11.02.2026 Bulletin 2026/07**

(21) Application number: **24780193.9**

(22) Date of filing: **25.03.2024**

(51) International Patent Classification (IPC):
**B01J 27/053** (2006.01)   **B01D 53/94** (2006.01)
**F01N 3/10** (2006.01)   **F01N 3/28** (2006.01)

(52) Cooperative Patent Classification (CPC):
**B01D 53/94; B01J 27/053; F01N 3/10; F01N 3/28**

(86) International application number:
**PCT/JP2024/011722**

(87) International publication number:
**WO 2024/204075 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 JP 2023054231**

(71) Applicant: **Mitsui Kinzoku Company, Limited
Tokyo (JP)**

(72) Inventors:
• **TAKASAKI Kohei
Ageo-shi, Saitama 362-0025 (JP)**
• **SHIMAMOTO Yasuhiro
Ageo-shi, Saitama 362-0025 (JP)**
• **IWAKURA Hironori
Ageo-shi, Saitama 362-0025 (JP)**
• **WATANABE Tokuya
Ageo-shi, Saitama 362-0025 (JP)**
• **ISAYAMA Akihiro
Ageo-shi, Saitama 362-0025 (JP)**
• **TAKEUCHI Ryo
Ageo-shi, Saitama 362-0025 (JP)**

(74) Representative: **Novagraaf Technologies
Bâtiment O2
2, rue Sarah Bernhardt
CS90017
92665 Asnières-sur-Seine Cedex (FR)**

(54) **EXHAUST GAS PURIFICATION CATALYST**

(57) An object of the present invention is to provide an exhaust gas purification catalyst including a catalyst layer containing Rh and a Ce-Zr-Al-based complex oxide, the exhaust gas purification catalyst being capable of achieving both improvement of the oxygen storage capacity of the Ce-Zr-Al-based complex oxide and prevention of the decrease in the exhaust gas purification performance of Rh, and the present invention provides an exhaust gas purification catalyst (1) including a substrate (10) and a first catalyst layer (20) provided on the substrate (10), wherein the first catalyst layer (20) contains Rh and a complex oxide containing Ce, Zr, and Al, wherein the content of the complex oxide is 70% by mass or more, based on a total mass of all components other than Rh in the first catalyst layer (20), and wherein a mass ratio of a content of Ce in terms of metal in the complex oxide to a content of Zr in terms of metal in the complex oxide is 0.03 or more and 0.50 or less.

[Figure 4]

## Description

### FIELD OF INVENTION

The present invention relates to an exhaust gas purification catalyst.

### BACKGROUND ART

Exhaust gas emitted from an internal combustion engine of an automobile, a motorcycle or the like contains harmful components such as hydrocarbons (HC), carbon monoxide (CO), and nitrogen oxides (NOx). A catalyst containing a noble metal element such as Pt, Pd, or Rh is used to purify and detoxify those harmful components. Pt and Pd are mainly involved in oxidative purification of HC and CO, and Rh is mainly involved in reductive purification of NOx.

In an exhaust gas purification catalyst, a carrier that supports a catalytically-active component (e.g., a noble metal element such as Pt, Pd, or Rh) is used. As the carrier, for example, a complex oxide containing Ce, Zr, and Al (which may hereinafter be referred to as "Ce-Zr-Al-based complex oxide") is used (e.g., Patent Documents 1 and 2).

Patent Document 1 discloses that a Ce-Zr-Al-based complex oxide, wherein the molar ratio of the content of Ce to the content of Zr (Ce/Zr) is 1/3 to 3/1 and the molar ratio of the content of Al to the total content of Ce and Zr (Al / (Ce + Zr)) is 2 to 10, is used as a carrier to support the noble metal element.

Patent Document 2 discloses that an $Al_2O_3$-$CeO_2$-$ZrO_2$ ternary complex oxide and an $Al_2O_3$-$ZrO_2$ binary complex oxide, wherein the mass ratio of $Al_2O_3$-$CeO_2$-$ZrO_2$ ternary complex oxide / ($Al_2O_3$-$CeO_2$-$ZrO_2$ ternary complex oxide + $Al_2O_3$-$ZrO_2$ binary complex oxide) is in the range of 0.33 or more and 0.5 or less, are used as a carrier to support Rh.

### CITATION LIST

PATENT DOCUMENTS

Patent Document 1: Japanese Patent Laid-Open No. 10-202102
Patent Document 2: Japanese Patent Laid-Open No. 2017-189745

### SUMMARY OF THE INVENTION

TECHNICAL PROBLEM

It is desirable that an air-fuel ratio (A/F) during supply to an internal combustion engine is controlled to be near a theoretical air-fuel ratio (stoichiometry). However, an actual air-fuel ratio fluctuates to a rich side (fuel-rich atmosphere) or a lean side (fuel-lean atmosphere), with stoichiometry at the center, depending on, for example, driving conditions of a motor vehicle. Thus, an air-fuel ratio of exhaust gas similarly fluctuates to a rich side or a lean side. A Ce-Zr-Al-based complex oxide has oxygen storage capacity (OSC). Therefore, use of a Ce-Zr-Al-based complex oxide can mitigate fluctuations in the oxygen concentration of exhaust gas and expand the operating window of a catalytically-active component.

Ce contributes to the oxygen storage capacity. Therefore, when in a catalyst layer containing Rh and a Ce-Zr-Al-based complex oxide, the content of Ce in the Ce-Zr-Al-based complex oxide is increased, the oxygen storage capacity of the Ce-Zr-Al-based complex oxide is improved, and the exhaust gas purification performance of Rh is improved. However, Ce promotes the oxidation of Rh. Pt and Pd tend to exhibit enhanced exhaust gas purification performance when moderately oxidized, whereas Rh tends to exhibit decreased exhaust gas purification performance when oxidized. Therefore, when the content of Ce in the Ce-Zr-Al-based complex oxide is excessive, the oxidation of Rh is promoted and the exhaust gas purification performance of Rh is decreased. Thus, when the Ce-Zr-Al-based complex oxide is used as a carrier, achieving both the oxygen storage capacity and the exhaust gas purification performance becomes particularly difficult in the case where Rh is used as a catalytically-active component, as compared to the case where Pt and/or Pd is used as a catalytically-active component. Furthermore, when the content of Ce in the Ce-Zr-Al-based complex oxide is excessive, the heat resistance of the Ce-Zr-Al-based complex oxide becomes insufficient. Thus, under a high-temperature environment, aggregation of the Ce-Zr-Al-based complex oxide, disappearance of pores (i.e., a decrease in specific surface area) of the Ce-Zr-Al-based complex oxide, and the like occur, leading to burial of Rh, sintering of Rh, and the like. As a result, the exhaust gas purification performance of Rh is decreased after exposure to a high-temperature environment. In the present specification, the term "high-temperature" refers to a temperature of preferably 800°C or more, more preferably 850°C or more, and still more preferably 900°C or more.

On the other hand, when the proportion of components other than the Ce-Zr-Al-based complex oxide to all components other than Rh in the catalyst layer is increased, under a high-temperature environment, a difference in the degree of thermal expansion and thermal contraction between the Ce-Zr-Al-based complex oxide and the components other than the Ce-Zr-Al-based complex causes burial of Rh, sintering of Rh, and the like. As a result, the exhaust gas purification performance of Rh is decreased after exposure to a high-temperature environment.

Therefore, in an exhaust gas purification catalyst including a catalyst layer containing Rh and a Ce-Zr-Al-based complex oxide, there is a need to achieve both improvement of the oxygen storage capacity of the Ce-Zr-Al-based complex oxide and suppression of the decrease in the exhaust gas purification performance of Rh (particularly, suppression of the decrease in the exhaust gas purification performance of Rh after exposure to a high-temperature environment).

Accordingly, an object of the present invention is to provide an exhaust gas purification catalyst including a catalyst layer containing Rh and a Ce-Zr-Al-based complex oxide, the exhaust gas purification catalyst being capable of achieving both improvement of the oxygen storage capacity of the Ce-Zr-Al-based complex oxide and suppression of the decrease in the exhaust gas purification performance of Rh (particularly, suppression of the decrease in the exhaust gas purification performance of Rh after exposure to a high-temperature environment).

SOLUTION TO PROBLEM

The present inventors have found that, in an exhaust gas purification catalyst including a catalyst layer containing Rh and a Ce-Zr-Al-based complex oxide, it is possible to achieve both improvement of the oxygen storage capacity of the Ce-Zr-Al-based complex oxide and suppression of the decrease in the exhaust gas purification performance of Rh (particularly, suppression of the decrease in the exhaust gas purification performance of Rh after exposure to a high-temperature environment) by adjusting the content of the Ce-Zr-Al-based complex oxide to 70% by mass based on the total mass of all components other than Rh in the catalyst layer, and by adjusting the mass ratio of the content of Ce in terms of metal in the Ce-Zr-Al-based complex oxide to the content of Zr in terms of metal in the Ce-Zr-Al-based complex oxide to 0.03 or more and 0.50 or less. Based on these findings, the present inventors have completed the present invention.

The present invention encompasses the following inventions.

[1] An exhaust gas purification catalyst including a substrate and a first catalyst layer provided on the substrate,

wherein the first catalyst layer contains Rh and a complex oxide containing Ce, Zr, and Al,
wherein a content of the complex oxide is 70% by mass or more, based on a total mass of all components other than Rh in the first catalyst layer, and
wherein a mass ratio of a content of Ce in terms of metal in the complex oxide to a content of Zr in terms of metal in the complex oxide is 0.03 or more and 0.50 or less.

[2] The exhaust gas purification catalyst according to [1], wherein a mass ratio of a content of Al in terms of metal in the complex oxide to a total content of Ce and Zr in terms of metal in the complex oxide is 0.10 or more and 10 or less.

[3] The exhaust gas purification catalyst according to [1] or [2], wherein a total content of Ce, Zr, and Al in terms of oxide in the complex oxide is 75% by mass or more, based on a mass of the complex oxide.

[4] The exhaust gas purification catalyst according to any one of [1] to [3], wherein a content of a rare earth element other than Ce in terms of oxide in the complex oxide is 25% by mass or less, based on a mass of the complex oxide.

[5] The exhaust gas purification catalyst according to [4], wherein the rare earth element other than Ce is selected from La, Y, Pr, and Nd.

[6] The exhaust gas purification catalyst according to any one of [1] to [5], wherein the first catalyst layer contains an Al-based oxide.

[7] The exhaust gas purification catalyst according to any one of [1] to [6], wherein the first catalyst layer contains a binder.

[8] The exhaust gas purification catalyst according to [7], wherein the binder is an inorganic oxide other than a Ce-Zr-Al-based complex oxide.

[9] The exhaust gas purification catalyst according to any one of [1] to [8],

wherein the exhaust gas purification catalyst includes a second catalyst layer provided on the substrate,
wherein the first catalyst layer is provided on an upside of the second catalyst layer, and
wherein the second catalyst layer contains either Pd or Pt, or both Pd and Pt.

ADVANTAGEOUS EFFECTS OF INVENTION

According to the present invention, there is provided an exhaust gas purification catalyst including a catalyst layer containing Rh and a Ce-Zr-Al-based complex oxide, the exhaust gas purification catalyst being capable of achieving both improvement of the oxygen storage capacity of the Ce-Zr-Al-based complex oxide and suppression of the decrease in the exhaust gas purification performance of Rh (particularly, suppression of the decrease in the exhaust gas purification performance of Rh after exposure to a high-temperature environment).

## BRIEF DESCRIPTION OF DRAWINGS

Figure 1 is a partial end view showing a state in which an exhaust gas purification catalyst according to an embodiment of the present invention is disposed in an exhaust gas path of an internal combustion engine.
Figure 2 is an end view taken along line A-A of Figure 1.
Figure 3 is an enlarged view of a region denoted by the reference sign R in Figure 2.
Figure 4 is an end view taken along line B-B of Figure 1.

## DETAILED DESCRIPTION OF INVENTION

<< Description of terms >>

Hereinafter, the terms used herein will be described.

< Rare earth element >

Examples of a rare earth element include Sc, Y, La, Ce, Pr, Nd, Pm, Sm, Eu, Gd, Tb, Dy, Ho, Er, Tm, Yb, and Lu.

< Oxide >

The term "oxide of Al" refers to $Al_2O_3$, the term "oxide of Zr" refers to $ZrO_2$, the term "oxide of Si" refers to $SiO_2$, the term "oxide of B" refers to $B_2O_3$, the term "oxide of Cr" refers to $Cr_2O_3$, the term "oxide of Mg" refers to MgO, the term "oxide of Ca" refers to CaO, the term "oxide of Sr" refers to SrO, the term "oxide of Ba" refers to BaO, the term "oxide of Fe" refers to $Fe_3O_4$, the term "oxide of Mn" refers to $Mn_3O_4$, the term "oxide of Ni" refers to NiO, and the term "oxide of Ti" refers to $TiO_2$. The term "oxide of a rare earth element" refers to a sesquioxide ($Ln_2O_3$, wherein Ln represents a rare earth element other than Ce, Pr, and Tb), except that the term "oxide of Ce" refers to $CeO_2$, the term "oxide of Pr" refers to $Pr_6O_{11}$, and the term "oxide of Tb" refers to $Tb_4O_7$.

< Al-based oxide >

The term "Al-based oxide" refers to an oxide containing Al. The term "Al-based oxide" preferably refers to an oxide containing Al, wherein Al is the element with the highest mass-based content among the elements other than O that constitute the oxide. It should be noted that when an oxide containing Al falls within the scope of the Ce-Zr-Al-based complex oxide of the present invention, the oxide containing Al is excluded from the scope of the Al-based oxide. The Ce-Zr-Al-based complex oxide of the present invention will be described below.
The Al-based oxide is, for example, in particulate form. The Al-based oxide is used as a carrier for a catalytically-active component. From the viewpoint of improving the supportability for the catalytically-active component, the Al-based oxide is preferably porous. The Al-based oxide is distinct from alumina used as a binder. In the present specification, alumina used as a binder may be referred to as "alumina binder", and alumina used as a carrier may be referred to as "alumina material".
The Al-based oxide may contain one or more elements other than Al and O (which may hereinafter be referred to as "other element(s)"). The other element(s) can be selected from, for example, rare earth elements (e.g., Ce, Y, Pr, La, Nd, Sm, Eu, Gd, and the like), alkaline earth metal elements (e.g., Mg, Ca, Sr, Ba, and the like), B, Si, Zr, Cr, and the like.
Examples of the Al-based oxide include alumina (an oxide composed of Al and O), an oxide obtained by modifying the surface of alumina with the other element(s), an oxide obtained by dissolving the other element(s) in alumina, and the like. Examples of the Al-based oxide containing the other element(s) include alumina-silica, alumina-silicate, alumina-zirconia, alumina-chromia, alumina-ceria, alumina-lanthana, and the like.
In the Al-based oxide, the other element(s) may form a solid solution phase (e.g., a solid solution phase of $Al_2O_3$ and an oxide(s) of the other element(s)), or may form a single phase (e.g., an oxide phase(s) of the other element(s)) that is a crystalline phase or an amorphous phase, or may form both the solid solution phase and the single phase.
From the viewpoint of improving the heat resistance of the Al-based oxide, the content of Al in terms of oxide in the Al-based oxide is preferably 20% by mass or more, more preferably 25% by mass or more, still more preferably 30% by mass or more, still more preferably 35% by mass or more, and still more preferably 40% by mass or more, based on the mass of the Al-based oxide. The upper limit is 100% by mass.

In one embodiment, the Al-based oxide contains Zr. This can improve the heat resistance of the Al-based oxide. In the present specification, the Al-based oxide containing Zr may be referred to as "Al-Zr-based oxide". From the viewpoint of improving the heat resistance of the Al-based oxide, the content of Zr in terms of oxide in the Al-based oxide is preferably 10% by mass or more and 80% by mass or less, more preferably 15% by mass or more and 70% by mass or less, still more preferably 20% by mass or more and 60% by mass or less, still more preferably 25% by mass or more and 55% by mass or less, and still more preferably 30% by mass or more and 50% by mass or less, based on the mass of the Al-based oxide.

In another embodiment, the Al-based oxide contains one or more rare earth elements. This can improve the heat resistance of the Al-based oxide. From the viewpoint of improving the heat resistance of the Al-based oxide, the rare earth element is preferably selected from Y, Pr, Sc, La, Nd, Sm, Eu, Gd, Tb, Dy, Ho, Er, Tm, Yb, and Lu. From the viewpoint of improving the heat resistance of the Al-based oxide, the content of the rare earth element in terms of oxide in the Al-based oxide is preferably 1% by mass or more and 15% by mass or less, more preferably 3% by mass or more and 10% by mass or less, and still more preferably 5% by mass or more and 7% by mass or less, based on the mass of the Al-based oxide. The expression "the content of the rare earth element in terms of oxide in the Al-based oxide" refers to, in the case where the Al-based oxide contains a single rare earth element, the content of the single rare earth element in terms of oxide, and in the case where the Al-based oxide contains multiple rare earth elements, the total content of the multiple rare earth elements in terms of oxide.

In yet another embodiment, the Al-based oxide contains Zr and one or more rare earth elements. This can improve the heat resistance of the Al-based oxide. The above description with respect to the embodiment wherein the Al-based oxide contains Zr, and the above description with respect to the embodiment wherein the Al-based oxide contains one or more rare earth elements are also applied to this embodiment.

In the case where the composition of the Al-based oxide is known, the content of each element in terms of oxide in the Al-based oxide can be determined from the composition of the Al-based oxide.

In the case where the composition of the Al-based oxide is not known, the content of each element in terms of oxide in the Al-based oxide can be determined by analyzing a sample using energy dispersive X-ray spectroscopy (EDX) to obtain an element mapping, and performing EDX elemental analysis on a designated particle in the obtained element mapping. Specifically, the content of each element in terms of oxide in the designated particle can be determined by qualitatively identifying (color-coding) an Al-based oxide particle and (an)other particle(s) (e.g., a Ce-Zr-Al-based complex oxide particle) by elemental mapping, and performing compositional analysis (elemental analysis) on the designated particle.

< Ce-based oxide >

The term "Ce-based oxide" refers to an oxide containing Ce, wherein Ce is the element with the highest mass-based content among the elements other than O that constitute the oxide. It should be noted that when an oxide containing Ce falls within the scope of the Ce-Zr-Al-based complex oxide of the present invention, the oxide containing Ce is excluded from the scope of the Ce-based oxide. The Ce-Zr-Al-based complex oxide of the present invention will be described below.

The Ce-based oxide is, for example, in particulate form. The Ce-based oxide is used as a carrier for a catalytically-active component. From the viewpoint of improving the supportability for the catalytically-active component, the Ce-based oxide is preferably porous. The Ce-based oxide is distinct from ceria used as a binder. In the present specification, ceria used as a binder may be referred to as "ceria binder".

The Ce-based oxide may contain one or more elements other than Ce and O (which may hereinafter be referred to as "other element(s)"). The other element(s) can be selected from, for example, rare earth elements other than Ce, alkaline earth metal elements (e.g., Mg, Ca, Sr, Ba, and the like), Fe, Mn, Ni, Zr, Al, and the like.

Examples of the Ce-based oxide include ceria (an oxide composed of Ce and O), an oxide obtained by modifying the surface of ceria with the other element(s), and an oxide obtained by dissolving the other element(s) in ceria, and the like.

In the Ce-based oxide, the other element(s) may form a solid solution phase (e.g., a solid solution phase of $CeO_2$ and an oxide(s) of the other element(s)), or may form a single phase (e.g., an oxide phase(s) of the other element(s)) that is a crystalline phase or an amorphous phase, or may form both the solid solution phase and the single phase.

The content of Ce in terms of oxide in the Ce-based oxide is preferably 90% by mass or more, more preferably 95% by mass or more, and still more preferably 99% by mass or more, based on the mass of the Ce-based oxide. The upper limit is 100% by mass.

The content of Zr in terms of oxide in the Ce-based oxide is preferably 10% by mass or less, more preferably 5% by mass or less, still more preferably 3% by mass or less, and still more preferably 1% by mass or less, based on the mass of the Ce-based oxide. The lower limit is zero. The content of Zr in terms of oxide in the Ce-based oxide is smaller than the content of Zr in terms of oxide in a Ce-Zr-based complex oxide, and in this respect, the Ce-based oxide is distinguished from the Ce-Zr-based complex oxide.

The content of each element in terms of oxide in the Ce-based oxide can be determined in the same manner as the content of each element in terms of oxide in the Al-based oxide described above.

< Ce-Zr-based complex oxide >

The term "Ce-Zr-based complex oxide" refers to a complex oxide containing Ce and Zr, wherein the content of Ce in terms of oxide in the complex oxide is 5% by mass or more and 95% by mass or less based on the mass of the complex oxide, wherein the content of Zr in terms of oxide in the complex oxide is 5% by mass or more and 95% by mass or less based on the mass of the complex oxide, and wherein the content of Al in terms of oxide in the complex oxide is less than 5% by mass based on the mass of the complex oxide. It should be noted that when a complex oxide containing Ce and Zr falls within the scope of the Ce-Zr-Al-based complex oxide of the present invention, the complex oxide containing Ce and Zr is excluded from the scope of the Ce-Zr-based complex oxide. The Ce-Zr-Al-based complex oxide of the present invention will be described below.

The Ce-Zr-based complex oxide is, for example, in particulate form. The Ce-Zr-based complex oxide is used as a carrier for a catalytically-active component. From the viewpoint of improving the supportability for the catalytically-active component, the Ce-Zr-based complex oxide is preferably porous.

In the Ce-Zr-based complex oxide, Ce may form a solid solution phase (e.g., a solid solution phase of $CeO_2$ and $ZrO_2$), or may form a single phase (e.g., a single phase of $CeO_2$) that is a crystalline phase or an amorphous phase, or may form both the solid solution phase and the single phase. However, it is preferable that at least part of Ce forms the solid solution phase.

In the Ce-Zr-based complex oxide, Zr may form a solid solution phase (e.g., a solid solution phase of $CeO_2$ and $ZrO_2$), or may form a single phase (e.g., a single phase of $ZrO_2$) that is a crystalline phase or an amorphous phase, or may form both the solid solution phase and the single phase. However, it is preferable that at least part of Zr forms the solid solution phase.

From the viewpoint of improving the heat resistance and oxygen storage capacity of the Ce-Zr-based complex oxide, the total content of Ce and Zr in terms of oxide in the Ce-Zr-based complex oxide is preferably 70% by mass or more, more preferably 75% by mass or more, still more preferably 80% by mass or more, and still more preferably 85% by mass or more, based on the mass of the Ce-Zr-based complex oxide. The upper limit is 100% by mass.

From the viewpoint of improving the oxygen storage capacity of the Ce-Zr-based complex oxide, the content of Ce in terms of oxide in the Ce-Zr-based complex oxide is preferably 5% by mass or more and 95% by mass or less, more preferably 5% by mass or more and 90% by mass or less, still more preferably 7% by mass or more and 90% by mass or less, and still more preferably 10% by mass or more and 85% by mass or less, based on the mass of the Ce-Zr-based complex oxide.

From the viewpoint of improving the heat resistance of the Ce-Zr-based complex oxide, the content of Zr in terms of oxide in the Ce-Zr-based complex oxide is preferably 5% by mass or more and 95% by mass or less, more preferably 5% by mass or more and 90% by mass or less, still more preferably 7% by mass or more and 90% by mass or less, and still more preferably 10% by mass or more and 85% by mass or less, based on the mass of the Ce-Zr-based complex oxide.

The Ce-Zr-based complex oxide may contain one or more elements other than Ce, Zr, and O (which may hereinafter be referred to as "other element(s)"). The other element(s) can be selected from, for example, rare earth elements other than Ce, alkaline earth metal elements (e.g., Mg, Ca, Sr, Ba, and the like), Fe, Mn, Ni, Zr, Al, and the like.

In the case where the Ce-Zr-based complex oxide contains the other element(s), the other element(s) may form a solid solution phase (e.g., a solid solution phase of $CeO_2$ and an oxide(s) of the other element(s), a solid solution phase of $ZrO_2$ and an oxide(s) of the other element(s), or a solid solution phase of $CeO_2$, $ZrO_2$, and an oxide(s) of the other element(s)), or may form a single phase (e.g., a single phase of an oxide(s) of the other element(s)) that is a crystalline phase or an amorphous phase, or may form both the solid solution phase and the single phase. However, it is preferable that at least part of the other element(s) forms the solid solution phase.

Examples of the Ce-Zr-based complex oxide include a $CeO_2$-$ZrO_2$ solid solution, an oxide obtained by modifying the surface of a $CeO_2$-$ZrO_2$ solid solution with the other element(s), and an oxide obtained by dissolving the other element(s) in a $CeO_2$-$ZrO_2$ solid solution.

In one embodiment, the Ce-Zr-based complex oxide contains one or more rare earth elements other than Ce. This can improve the heat resistance of the Ce-Zr-based complex oxide. From the viewpoint of improving the heat resistance of the Ce-Zr-based complex oxide, the rare earth element is preferably selected from Y, Pr, Sc, La, Nd, Sm, Eu, Gd, Tb, Dy, Ho, Er, Tm, Yb, and Lu.

The content of each element in terms of oxide in the Ce-Zr-based complex oxide can be determined in the same manner as the content of each element in terms of oxide in the Al-based oxide described above.

<< Exhaust gas purification catalyst >>

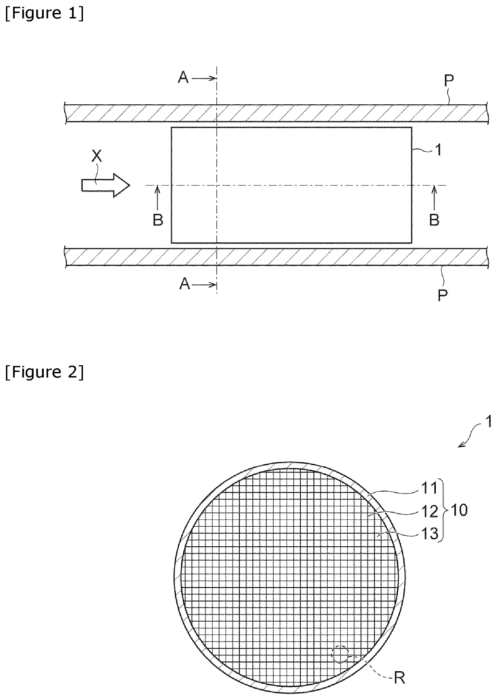

Hereinafter, an exhaust gas purification catalyst 1 (which may hereinafter be referred to as "catalyst 1") according to an embodiment of the present invention will be described with reference to Figures 1 to 4.

As shown in Figure 1, the catalyst 1 is disposed in an exhaust gas path in an exhaust pipe P of an internal combustion engine. The internal combustion engine is, for example, a gasoline engine. Exhaust gas emitted from the internal combustion engine flows through the exhaust gas path in the exhaust pipe P from one end to the other end of the exhaust pipe P, and is purified by the catalyst 1 provided in the exhaust pipe P. In the drawings, the exhaust gas flow direction is denoted by the reference sign X. In the present specification, an upstream position in the exhaust gas flow direction X may be referred to as "exhaust gas inflow side" or "upstream side", and a downstream position in the exhaust gas flow direction X may be referred to as "exhaust gas outflow side" or "downstream side".

In the exhaust gas path of the exhaust pipe P, another exhaust gas purification catalyst may be disposed on the upstream side and/or the downstream side of the catalyst 1.

As shown in Figures 2 to 4, the catalyst 1 includes a substrate 10 and a first catalyst layer 20 provided on the substrate 10.

The catalyst 1 may include a catalyst layer(s) other than the first catalyst layer 20 at one or more positions selected from the lower side, the upper side, the downstream side, and the upstream side of the first catalyst layer 20. For example, as shown in Figures 2 to 4, the catalyst 1 may include a second catalyst layer 30 provided on the substrate 10. The second catalyst layer 30 is a layer provided as necessary. Therefore, the present invention also encompasses an embodiment wherein the second catalyst layer 30 is omitted. However, from the viewpoint of improving the exhaust gas purification performance, the catalyst 1 preferably includes the second catalyst layer 30.

< Substrate >

Hereinafter, the substrate 10 will be described.

The material constituting the substrate 10 can be appropriately selected from known materials. Examples of the material constituting the substrate 10 include a ceramic material, a metal material, and the like. The ceramic material is preferred. Examples of the ceramic material include carbide ceramics such as silicon carbide, titanium carbide, tantalum carbide, and tungsten carbide; nitride ceramics such as aluminum nitride, silicon nitride, boron nitride, and titanium nitride; and oxide ceramics such as alumina, zirconia, cordierite, mullite, zircon, aluminum titanate, and magnesium titanate. Examples of the metal material include alloys such as stainless steel.

As shown in Figures 2 to 4, the substrate 10 includes a tubular member 11, a partition wall 12 provided in the tubular member 11, and cells 13 that are separated from one another by the partition wall 12. The substrate 10 preferably has a honeycomb structure.

As shown in Figure 2, the tubular member 11 defines the external shape of the substrate 10, and the axial direction of the tubular member 11 coincides with the axial direction of the substrate 10. As shown in Figure 2, the tubular member 11 has a hollow cylindrical shape, but may have another shape such as a hollow elliptic cylindrical shape or a polygonal tubular shape.

As shown in Figures 2 to 4, the partition wall 12 is present between adjacent cells 13, and the adjacent cells 13 are separated from each other by the partition wall 12. The partition wall 12 may have a porous structure that allows exhaust gas to pass through. The thickness of the partition wall 12 is, for example, 20 $\mu$m or more and 1500 $\mu$m or less.

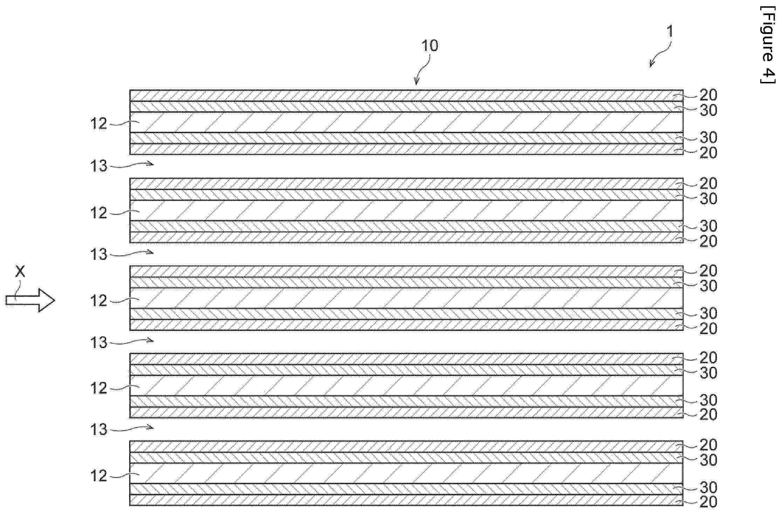

As shown in Figure 4, each cell 13 extends in the exhaust gas flow direction X and has an end on the exhaust gas inflow side and an end on the exhaust gas outflow side.

As shown in Figure 4, both the end on the exhaust gas inflow side and the end on the exhaust gas outflow side of each cell 13 are open. Therefore, the exhaust gas that has flowed in from the end (opening) on the exhaust gas inflow side of each cell 13 flows out from the end (opening) on the exhaust gas outflow side of each cell 13. Such a configuration is known as a flow-through type.

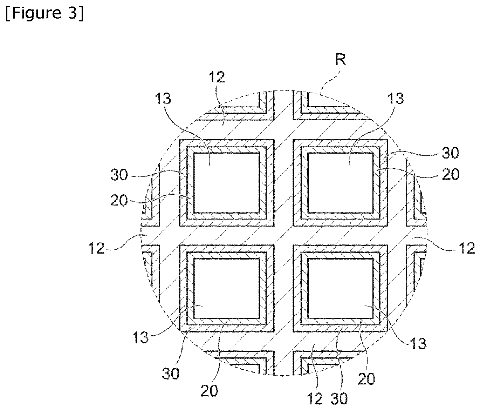

As shown in Figures 2 and 3, the shape in a plan view of the end (opening) on the exhaust gas inflow side of each cell 13 is a rectangle, but may be another shape such as a hexagon or an octagon. This description is also applied to the shape in a plan view of the end (opening) on the exhaust gas outflow side of each cell 13.

The cell density per square inch of the substrate 10 is, for example, 100 cells or more and 1000 cells or less. The cell density per square inch of the substrate 10 refers to the total number of cells 13 per square inch in a cross section obtained by cutting the substrate 10 along a plane perpendicular to the exhaust gas flow direction X.

The volume of the substrate 10 is, for example, 0.1 L or more and 20 L or less. The volume of the substrate 10 refers to the apparent volume of the substrate 10. For example, in the case where the substrate 10 is in the form of a cylinder, the outer diameter of the substrate 10 is 2r, and the length of the substrate 10 is $L_{10}$, the volume of the substrate 10 is represented by the formula: Volume of substrate 10 = $\pi \times r^2 \times L_{10}$.

The substrate 10 may be provided with a first sealing member that seals the ends on the exhaust gas outflow side of some of the cells 13, and a second sealing member that seals the ends on the exhaust gas inflow side of the remaining cells 13. Thus, some of the cells 13 are each an inflow-side cell in which the end on the exhaust gas inflow side is open and the end on the exhaust gas outflow side is closed by the first sealing member, and the remaining cells 13 are each an outflow-side cell in which the end on the exhaust gas inflow side is closed by the second sealing member and the end on the exhaust gas outflow side is open. A plurality of outflow-side cells (for example, four) are arranged around and adjacent to one inflow-side cell, and the inflow-side cell and the outflow-side cells adjacent to the inflow-side cell are separated from one another by the porous partition wall 12. The exhaust gas that has flowed in from the end (opening) on the exhaust gas inflow side of the inflow-side cell passes through the porous partition wall 12 and flows out from the end (opening) on the exhaust gas outflow side of the outflow-side cell. Such a configuration is known as a wall-flow type. When the exhaust gas that has flowed in from the end (opening) on the exhaust gas inflow side of the inflow-side cell passes through the porous partition wall 12, particulate matter (PM) contained in the exhaust gas is captured in pores of the partition wall 12. Accordingly, in the case where the substrate 10 is a wall-flow type, the catalyst 1 is useful as a gasoline particulate filter for a gasoline engine or a diesel particulate filter for a diesel engine.

< First catalyst layer >

Hereinafter, the first catalyst layer 20 will be described.

As shown in Figures 3 and 4, the first catalyst layer 20 is provided on the upside of the second catalyst layer 30.

The expression "the first catalyst layer 20 is provided on the upside of the second catalyst layer 30" means that part or the whole of the first catalyst layer 20 is present on, of two main surfaces of the second catalyst layer 30, the main surface opposite to the main surface on the partition wall 12 side. The expression "the main surface of the second catalyst layer 30" refers to the outer surface of the second catalyst layer 30, the outer surface extending in the exhaust gas flow direction X. The first catalyst layer 20 may be provided directly on the main surface of the second catalyst layer 30, or may be provided on the main surface of the second catalyst layer 30 via another layer. Usually, the first catalyst layer 20 is provided directly on the main surface of the second catalyst layer 30. The first catalyst layer 20 may be provided to cover part or the whole of the main surface of the second catalyst layer 30. The expression "the first catalyst layer 20 provided on the substrate 10" encompasses both an embodiment wherein the first catalyst layer 20 is provided directly on the main surface of the second catalyst layer 30, and an embodiment wherein the first catalyst layer 20 is provided on the main surface of the second catalyst layer 30 via another layer.

In the case where the second catalyst layer 30 is omitted, the first catalyst layer 20 is provided on the surface on the cell 13 side of the partition wall 12. The expression "the surface on the cell 13 side of the partition wall 12" refers to the outer surface of the partition wall 12, the outer surface extending in the exhaust gas flow direction X. The first catalyst layer 20 may be provided directly on the surface on the cell 13 side of the partition wall 12, or may be provided on the surface on the cell 13 side of the partition wall 12 via another layer. Usually, the first catalyst layer 20 is provided directly on the surface on the cell 13 side of the partition wall 12.

In the case where the first catalyst layer 20 is provided directly on the surface on the cell 13 side of the partition wall 12, the first catalyst layer 20 may be composed of a structure rising from the surface on the cell 13 side of the partition wall 12 toward the cell 13 side (hereinafter referred to as "rising structure"), or may be composed of a structure present inside the partition wall 12 (hereinafter referred to as "internal structure"), or may have both the rising structure and the internal structure. The expression "the first catalyst layer 20 provided on the substrate 10" encompasses an embodiment wherein the first catalyst layer 20 is composed of the rising structure, an embodiment wherein the first catalyst layer 20 is composed of the internal structure, and an embodiment wherein the first catalyst layer 20 has both the rising structure and the internal structures.

As shown in Figure 4, the first catalyst layer 20 extends along the exhaust gas flow direction X from the end on the exhaust gas inflow side of the partition wall 12 to the end on the exhaust gas outflow side of the partition wall 12. The first catalyst layer 20 may extend from the end on the exhaust gas inflow side of the partition wall 12 along the exhaust gas flow direction X so as not to reach the end on the exhaust gas outflow side of the partition wall 12, or may extend from the end on the exhaust gas outflow side of the partition wall 12 along the direction opposite to the exhaust gas flow direction X so as not to reach the end on the exhaust gas inflow side of the partition wall 12.

From the viewpoint of balancing the exhaust gas purification performance and the cost, the mass (mass after calcining) of the first catalyst layer 20 per unit volume of the portion of the substrate 10 provided with the first catalyst layer 20 is preferably 20 g/L or more and 200 g/L or less, more preferably 30 g/L or more and 150 g/L or less, still more preferably 40 g/L or more and 120 g/L or less, and still more preferably 50 g/L or more and 100 g/L or less. The mass of the first catalyst layer 20 per unit volume of the portion of the substrate 10 provided with the first catalyst layer 20 is calculated by the formula: (Mass of first catalyst layer 20) / ((Volume of substrate 10) $\times$ (Average length $L_{20}$ of first catalyst Layer 20 / Length $L_{10}$ of substrate 10)). In the present specification, the term "length" refers to the dimension in the axial direction of the substrate 10, unless otherwise defined.

The expression "the mass of the first catalyst layer 20" refers to the total of the masses of all metal elements contained in the first catalyst layer 20, wherein the mass(es) of a noble metal element(s) is/are determined in terms of metal, and the mass(es) of a metal element(s) other than the noble metal element(s) is/are determined in terms of oxide. In other words, the expression "the mass of the first catalyst layer 20" refers to the calculated mass obtained by totalizing the mass(es) of the noble metal element(s) contained in the first catalyst layer 20 in terms of metal and the mass(es) of the metal element(s) other than the noble metal element(s) contained in the first catalyst layer 20 in terms of oxide. The term "metal element" encompasses metalloid elements such as Si and B. The term "noble metal element" encompasses Au, Ag, Pt, Pd, Rh, Ru, Ir, and Os. The meaning of the term "oxide" is as defined in the section << Description of terms >> described above.

One example of the method for measuring the average length $L_{20}$ of the first catalyst layer 20 is as follows:

A sample that extends in the axial direction of the substrate 10 and has the same length as the length $L_{10}$ of the substrate 10 is cut out from the catalyst 1. The sample is, for example, in the form of a cylinder having a diameter of 25.4 mm. The diameter of the sample may be changed as necessary. In the case where the first catalyst layer 20 extends from the end on the exhaust gas inflow side of the partition wall 12 along the exhaust gas flow direction X, the sample is cut at 5 mm intervals in planes perpendicular to the axial direction of the substrate 10 to obtain cut pieces, which are referred to as the first cut piece, the second cut piece, and so on up to the n-th cut piece, sequentially from the side of the end on the exhaust gas inflow side of the sample. In the case where the first catalyst layer 20 extends from the end on the exhaust gas outflow side of the partition wall 12 along the direction opposite to the exhaust gas flow direction X, the sample is cut at 5 mm intervals in planes perpendicular to the axial direction of the substrate 10 to obtain cut pieces, which are referred to as the first cut piece, the second cut piece, and so on up to the n-th cut piece, sequentially from the side of the end on the exhaust gas outflow side of the sample. In both cases, the length of each cut piece is 5 mm. The composition of each cut piece is analyzed using an X-ray fluorescence analyzer (XRF) (e.g., energy dispersive X-ray analyzer (EDX), wavelength dispersive X-ray analyzer (WDX)), inductively coupled plasma-atomic emission spectroscopy (ICP-AES), scanning electron microscopy-energy dispersive X-ray spectroscopy (SEM-EDX), or the like. Based on the composition of each cut piece, it is confirmed whether or not each cut piece includes part of the first catalyst layer 20.

It is not necessarily required to perform the compositional analysis for a cut piece that apparently includes part of the first catalyst layer 20. For example, it is possible to confirm whether or not each cut piece includes part of the first catalyst layer 20, by observing a cross section thereof using a scanning electron microscope (SEM), an electron probe microanalyzer (EPMA), or the like. At the time of observing the cross section, element mapping of the cross section may be performed.

After confirming whether or not each cut piece includes part of the first catalyst layer 20, the length of the first catalyst layer 20 included in the sample is calculated based on the following formula:

Length of first catalyst layer 20 included in sample = 5 mm × (Number of cut pieces each including part of first catalyst layer 20)

For example, in the case where each of the first cut piece to the k-th cut piece includes part of the first catalyst layer 20, whereas each of the (k + 1)-th to the n-th cut pieces does not include part of the first catalyst layer 20, the length of the first catalyst layer 20 included in the sample is (5 × k) mm.

One example of the method for more specifically measuring the length of the first catalyst layer 20 included in the sample is as follows:
The k-th cut piece (in the case where the first catalyst layer 20 extends from the end on the exhaust gas inflow side of the partition wall 12 along the exhaust gas flow direction X, the k-th cut piece is a cut piece obtained closest to the end on the exhaust gas outflow side of the sample among the cut pieces each including part of the first catalyst layer 20; and in the case where the first catalyst layer 20 extends from the end on the exhaust gas outflow side of the partition wall 12 along the direction opposite to the exhaust gas flow direction X, the k-th cut piece is a cut piece obtained closest to the end on the exhaust gas inflow side of the sample among the cut pieces each including part of the first catalyst layer 20) is cut in the axial direction of the substrate 10, and part of the first catalyst layer 20 present in the resulting cross section is observed using SEM, EPMA, or the like, to measure the length of part of the first catalyst layer 20 included in the k-th cut piece. Thereafter, the length of the first catalyst layer 20 included in the sample is calculated based on the following formula:

Length of first catalyst layer 20 included in sample = (5 mm × (k-1)) + (Length of part of first catalyst layer 20 included in k-th cut piece)

For 8 to 16 samples arbitrarily cut out from the catalyst 1, the length of the first catalyst layer 20 included in each sample is measured, and the average value of the measured lengths is defined as the average length $L_{20}$ of the first catalyst layer 20.

From the viewpoint of balancing the exhaust gas purification performance and the cost, the total mass of all components other than Rh in the first catalyst layer 20 per unit volume of the portion of the substrate 10 provided with the first catalyst layer 20 is preferably 20 g/L or more and 200 g/L or less, more preferably 30 g/L or more and 150 g/L or less, still more preferably 40 g/L or more and 120 g/L or less, and still more preferably 50 g/L or more and 100 g/L or less.

The expression "the total mass of all components other than Rh in the first catalyst layer 20" refers to the total of the masses of all metal elements other than Rh contained in the first catalyst layer 20, wherein the mass(es) of a noble metal element(s) other than Rh is/are determined in terms of metal, and the mass(es) of a metal element(s) other than the noble metal element(s) is/are determined in terms of oxide. In other words, the expression "the total mass of all components other than Rh in the first catalyst layer 20" refers to the calculated mass obtained by totalizing the mass(es) of the noble metal element(s) other than Rh contained in the first catalyst layer 20 in terms of metal, and the mass(es) of the metal element(s) other than the noble metal element(s) contained in the first catalyst layer 20 in terms of oxide. The meanings of the terms "metal element", "noble metal element", and "oxide" are as described above.

The first catalyst layer 20 contains Rh and a complex oxide containing Ce, Zr, and Al (which may hereinafter be referred to as "Ce-Zr-Al-based complex oxide").

Rh contained in the first catalyst layer 20 is in the form capable of functioning as a catalytically-active component, for example, in the form of a catalytically-active component containing Rh, such as metal Rh, an alloy containing Rh, or a compound containing Rh (e.g., an oxide of Rh). From the viewpoint of improving the exhaust gas purification performance, it is preferable that the catalytically-active component containing Rh is in particulate form.

From the viewpoint of balancing the exhaust gas purification performance and the cost, the content of Rh in terms of metal in the first catalyst layer 20 is preferably 0.05% by mass or more and 5% by mass or less, more preferably 0.1 % by mass or more and 3% by mass or less, and still more preferably 0.2% by mass or more and 1.5% by mass or less, based on the mass of the first catalyst layer 20.

The first catalyst layer 20 may contain one or more noble metal elements other than Rh. Examples of the noble metal element other than Rh include Au, Ag, Pt, Pd, Ir, Ru, Os, and the like. The noble metal element other than Rh contained in the first catalyst layer 20 is in the form capable of functioning as a catalytically-active component, for example, in the form of a catalytically-active component containing the noble metal element other than Rh, such as metal, an alloy containing the noble metal element, or a compound containing the noble metal element (e.g., an oxide of the noble metal element). From the viewpoint of improving the exhaust gas purification performance, it is preferable that the catalytically-active component containing the noble metal element other than Rh is in particulate form.

In the case where the first catalyst layer 20 contains Rh and the noble metal element other than Rh, Rh and the noble metal element other than Rh may form an alloy, which may reduce the active sites of Rh that contribute to the exhaust gas purification performance. Accordingly, it is preferable that the first catalyst layer 20 is substantially free from the noble metal element other than Rh.

The expression "the first catalyst layer 20 is substantially free from the noble metal element other than Rh" means that the mass percentage of the mass of the noble metal element other than Rh in terms of metal in the first catalyst layer 20, based on the mass of Rh in terms of metal in the first catalyst layer 20, is preferably 1.0% by mass or less, more preferably 0.5% by mass or less, and still more preferably 0.1% by mass or less. The lower limit is zero. The expression "the mass of the noble metal element other than Rh in terms of metal in the first catalyst layer 20" refers to, in the case where the first catalyst layer 20 contains a single noble metal element other than Rh, the mass of the single noble metal element other than Rh in terms of metal, and in the case where the first catalyst layer 20 contains multiple noble metal elements other than Rh, the total mass of the multiple noble metal elements other than Rh in terms of metal.

In the case where the composition of raw materials used for forming the first catalyst layer 20 is known, the content of each metal element in terms of metal or in terms of oxide in the first catalyst layer 20 can be determined from the composition of the raw materials used for forming the first catalyst layer 20.

In the case where the composition of raw materials used for forming the first catalyst layer 20 is not known, the content of each metal element in terms of metal or in terms of oxide in the first catalyst layer 20 can be determined using a conventional method such as scanning electron microscopy-energy dispersive X-ray spectroscopy (SEM-EDX), an electron probe microanalyzer (EPMA), X-ray fluorescence analysis (XRF), or inductively coupled plasma-atomic emission spectroscopy (ICP-AES). A specific example is as described below.

First, a test piece cut out from the catalyst 1 is pulverized and then analyzed by XRF or ICP-AES, so that the 20 metal elements with the highest molar quantities are identified in descending order. The test piece may contain a portion derived from the substrate 10 and/or a portion derived from the second catalyst layer 30, as long as it contains a portion derived from the first catalyst layer 20.

Then, the portion derived from the first catalyst layer 20 contained in the test piece is analyzed by SEM-EDX or EPMA. In SEM-EDX or EPMA, the 20 metal elements identified above are used as analysis targets, and for each of 10 fields of view in SEM, the mol% value of each metal element is analyzed, assuming that the total mole percentage of the 20 metal elements is 100 mol%. The average mole percentage of each metal element in the 10 fields of view is defined as the mole percentage of each metal element in the first catalyst layer 20. From the mole percentage of each metal element in the first catalyst layer 20, the mass percentage of each noble metal element in terms of metal in the first catalyst layer 20, and the mass percentage of each metal element other than noble metal elements in terms of oxide in the first catalyst layer 20 are calculated. The mass percentage of each noble metal element in terms of metal in the first catalyst layer 20 is calculated using the formula: (Mass of each noble metal element in terms of metal, calculated from mole percentage) / ((Total mass of noble metal elements in terms of metal, calculated from mole percentages) + (Total mass of metal elements other than noble metal elements in terms of oxide, calculated from mole percentages)) × 100. The mass percentage of each metal element other than noble metal elements in terms of oxide in the first catalyst layer 20 is calculated using the formula: (Mass of each metal element other than noble metal elements in terms of oxide, calculated from mole percentage) / ((Total mass of noble metal elements in terms of metal, calculated from mole percentages) + (Total mass of metal elements other than noble metal elements in terms of oxide, calculated from mole percentages)) × 100.

It is desirable that the air-fuel ratio (A/F) during supply to the internal combustion engine is controlled to be near the theoretical air-fuel ratio (stoichiometry). However, since the actual air-fuel ratio fluctuates to a rich side (fuel-rich atmosphere) or a lean side (fuel-lean atmosphere), with stoichiometry at the center, depending on, for example, driving conditions of a motor vehicle, an air-fuel ratio of exhaust gas similarly fluctuates to a rich side or a lean side. Since the Ce-Zr-Al-based complex oxide has oxygen storage capacity, use of the Ce-Zr-Al-based complex oxide can mitigate fluctuations in the oxygen concentration of exhaust gas and expand the operating window of the catalyst.

Ce contributes to the oxygen storage capacity. Therefore, when in a catalyst layer containing Rh and the Ce-Zr-Al-based complex oxide, the content of Ce in the Ce-Zr-Al-based complex oxide is increased, the oxygen storage capacity of the Ce-Zr-Al-based complex oxide is improved, and the exhaust gas purification performance of Rh is improved. However, Ce promotes the oxidation of Rh. Pt and Pd tend to exhibit enhanced exhaust gas purification performance when moderately oxidized, whereas Rh tends to exhibit decreased exhaust gas purification performance when oxidized. Therefore, when the content of Ce in the Ce-Zr-Al-based complex oxide is excessive, the oxidation of Rh is promoted and the exhaust gas purification performance of Rh is decreased. Thus, when the Ce-Zr-Al-based complex oxide is used as a carrier, achieving both the oxygen storage capacity and the exhaust gas purification performance becomes particularly difficult in the case where Rh is used as a catalytically-active component, as compared to the case where Pt and/or Pd is used as a catalytically-active component. Furthermore, when the content of Ce in the Ce-Zr-Al-based complex oxide is excessive, the heat resistance of the Ce-Zr-Al-based complex oxide becomes insufficient. Thus, under a high-temperature environment, aggregation of the Ce-Zr-Al-based complex oxide, disappearance of pores (i.e., a decrease in specific surface area) of the Ce-Zr-Al-based complex oxide, and the like occur, leading to burial of Rh, sintering of Rh, and the like. As a result, the exhaust gas purification performance of Rh is decreased after exposure to a high-temperature environment. In the present specification, the term "high-temperature" refers to a temperature of preferably 800°C or more, more preferably 850°C or more, and still more preferably 900°C or more.

Accordingly, in the present invention, the ratio of the content of Ce in terms of metal in the Ce-Zr-Al-based complex oxide to the content of Zr in terms of metal in the Ce-Zr-Al-based complex oxide is adjusted to achieve both improvement of the oxygen storage capacity of the Ce-Zr-Al-based complex oxide and suppression of the decrease in the exhaust gas purification performance of Rh (particularly, suppression of the decrease in the exhaust gas purification performance of Rh after exposure to a high-temperature environment). Specifically, the mass ratio of the content of Ce in terms of metal in the Ce-Zr-Al-based complex oxide to the content of Zr in terms of metal in the Ce-Zr-Al-based complex oxide is preferably 0.03 or more and 0.50 or less, more preferably 0.07 or more and 0.50 or less, still more preferably 0.07 or more and 0.42 or less, and still more preferably 0.10 or more and 0.42 or less. In the present specification, the Ce-Zr-Al-based complex oxide in which the aforementioned mass ratio is 0.03 or more and 0.50 or less may be referred to as "Ce-Zr-Al-based complex oxide of the present invention".

From the viewpoint of more effectively achieving both improvement of the oxygen storage capacity of the Ce-Zr-Al-based complex oxide and suppression of the decrease in the exhaust gas purification performance of Rh (particularly, suppression of the decrease in the exhaust gas purification performance of Rh after exposure to a high-temperature environment), the mass ratio of the content of Al in terms of metal in the Ce-Zr-Al-based complex oxide of the present invention to the total content of Ce and Zr in terms of metal in the Ce-Zr-Al-based complex oxide of the present invention is preferably 0.10 or more and 10 or less, more preferably 0.22 or more and 10 or less, still more preferably 0.26 or more and 8 or less, and still more preferably 0.41 or more and 6 or less.

From the viewpoint of more effectively achieving both improvement of the oxygen storage capacity of the Ce-Zr-Al-based complex oxide and suppression of the decrease in the exhaust gas purification performance of Rh (particularly, suppression of the decrease in the exhaust gas purification performance of Rh after exposure to a high-temperature environment), the total content of Ce, Zr, and Al in terms of oxide in the Ce-Zr-Al-based complex oxide of the present invention is preferably 75% by mass or more, more preferably 85% by mass or more, still more preferably 90% by mass or more, and still more preferably 95% by mass or more, based on the mass of the Ce-Zr-Al-based complex oxide of the present invention. The upper limit is 100% by mass.

From the viewpoint of more effectively achieving both improvement of the oxygen storage capacity of the Ce-Zr-Al-based complex oxide and suppression of the decrease in the exhaust gas purification performance of Rh (particularly, suppression of the decrease in the exhaust gas purification performance of Rh after exposure to a high-temperature environment), the content of Ce in terms of oxide in the Ce-Zr-Al-based complex oxide of the present invention is 1% by mass or more and 30% by mass or less, and more preferably 2% by mass or more and 25% by mass or less, based on the mass of the Ce-Zr-Al-based complex oxide of the present invention.

From the viewpoint of more effectively achieving both improvement of the oxygen storage capacity of the Ce-Zr-Al-based complex oxide and suppression of the decrease in the exhaust gas purification performance of Rh (particularly, suppression of the decrease in the exhaust gas purification performance of Rh after exposure to a high-temperature environment), the total content of Ce and Zr in terms of oxide in the Ce-Zr-Al-based complex oxide of the present invention is preferably 10% by mass or more and 90% by mass or less, more preferably 15% by mass or more and 85% by mass or less, and still more preferably 20% by mass or more and 80% by mass or less, based on the mass of the Ce-Zr-Al-based complex oxide of the present invention.

The Ce-Zr-Al-based complex oxide of the present invention may contain one or more elements other than Ce, Zr, Al, and O (which may hereinafter be referred to as "other element(s)"). The other element(s) can be selected from, for example, rare earth elements other than Ce. The rare earth element other than Ce can be selected from, for example, Y, Pr, Sc, La, Nd, Sm, Eu, Gd, Tb, Dy, Ho, Er, Tm, Yb, Lu, and the like. However, from the viewpoint of more effectively achieving both improvement of the oxygen storage capacity of the Ce-Zr-Al-based complex oxide and suppression of the decrease in the exhaust gas purification performance of Rh (particularly, suppression of the decrease in the exhaust gas purification performance of Rh after exposure to a high-temperature environment), the rare earth element other than Ce is preferably selected from La, Y, Pr, and Nd.

From the viewpoint of more effectively achieving both improvement of the oxygen storage capacity of the Ce-Zr-Al-based complex oxide and suppression of the decrease in the exhaust gas purification performance of Rh (particularly, suppression of the decrease in the exhaust gas purification performance of Rh after exposure to a high-temperature environment), the content of the rare earth element other than Ce in terms of oxide in the Ce-Zr-Al-based complex oxide of the present invention is preferably 25% by mass or less, more preferably 20% by mass or less, still more preferably 15% by mass or less, and still more preferably 10% by mass or less, based on the mass of the Ce-Zr-Al-based complex oxide of the present invention. The lower limit is zero. The expression "the content of the rare earth element other than Ce in terms of oxide in the Ce-Zr-Al-based complex oxide of the present invention" refers to, in the case where the Ce-Zr-Al-based complex oxide of the present invention contains a single rare earth element other than Ce, the content of the single rare earth element other than Ce in terms of oxide, and in the case where the Ce-Zr-Al-based complex oxide of the present invention contains multiple rare earth elements other than Ce, the total content of the multiple rare earth elements other than Ce in terms of oxide.

In the case where the Ce-Zr-Al-based complex oxide of the present invention contains the rare earth element other than Ce, from the viewpoint of more effectively achieving both improvement of the oxygen storage capacity of the Ce-Zr-Al-based complex oxide and suppression of the decrease in the exhaust gas purification performance of Rh (particularly, suppression of the decrease in the exhaust gas purification performance of Rh after exposure to a high-temperature environment), the content of the rare earth element other than Ce in terms of oxide in the Ce-Zr-Al-based complex oxide of the present invention is preferably 5% by mass or more, more preferably 7% by mass or more, and still more preferably 10% by mass or more, based on the mass of the Ce-Zr-Al-based complex oxide of the present invention. Each of these lower limits may be combined with any of the aforementioned upper limits.

The content of each element in terms of metal or in terms of oxide in the Ce-Zr-Al-based complex oxide can be determined in the same manner as the content of each element in terms of oxide in the Al-based oxide described above.

In the Ce-Zr-Al-based complex oxide of the present invention, Ce may form a solid solution phase (e.g., a solid solution phase of $CeO_2$ and $ZrO_2$, or a solid solution phase of $CeO_2$, $ZrO_2$, and $Al_2O_3$), or may form a single phase (e.g., a single phase of $CeO_2$) that is a crystalline phase or an amorphous phase, or may form both the solid solution phase and the single phase. However, it is preferable that at least part of Ce forms the solid solution phase.

In the Ce-Zr-Al-based complex oxide of the present invention, Zr may form a solid solution phase (e.g., a solid solution phase of $CeO_2$ and $ZrO_2$, or a solid solution phase of $CeO_2$, $ZrO_2$, and $Al_2O_3$), or may form a single phase (e.g., a single phase of $ZrO_2$) that is a crystalline phase or an amorphous phase, or may form both the solid solution phase and the single phase. However, it is preferable that at least part of Zr forms the solid solution phase.

In the Ce-Zr-Al-based complex oxide of the present invention, Al may form a solid solution phase (e.g., a solid solution phase of $CeO_2$ and $Al_2O_3$, a solid solution phase of $ZrO_2$ and $Al_2O_3$, or a solid solution phase of $CeO_2$, $ZrO_2$, and $Al_2O_3$), or may form a single phase (a single phase of $Al_2O_3$) that is a crystalline phase or an amorphous phase. However, it is preferable that at least part of Al forms the solid solution phase.

In the Ce-Zr-Al-based complex oxide of the present invention, the rare earth element other than Ce may form a solid solution phase (e.g., a solid solution phase of $CeO_2$ and an oxide of the rare earth element other than Ce, a solid solution phase of $ZrO_2$ and an oxide of the rare earth element other than Ce, a solid solution phase of $CeO_2$, $ZrO_2$, and an oxide of the rare earth element other than Ce, or a solid solution phase of $Al_2O_3$ and an oxide of the rare earth element other than Ce), or may form a single phase (a single phase of oxide of the rare earth element other than Ce) that is a crystalline phase or an amorphous phase. However, it is preferable that at least part of the rare earth element other than Ce forms the solid solution phase.

The Ce-Zr-Al-based complex oxide of the present invention is, for example, in particulate form. The Ce-Zr-Al-based complex oxide of the present invention is used as a carrier for a catalytically-active component (e.g., Rh). From the viewpoint of improving the supportability for the catalytically-active component, the Ce-Zr-Al-based complex oxide of the present invention is preferably porous.

From the viewpoint of improving the exhaust gas purification performance of the catalytically-active component (e.g., Rh), it is preferable that at least part of the catalytically-active component is supported on the Ce-Zr-Al-based complex oxide of the present invention. The expression "at least part of the catalytically-active component is supported on the carrier" refers to a state in which at least part of the catalytically-active component is physically and/or chemically adsorbed or retained on the outer surface of the carrier and/or on the inner surface of pores of the carrier. The fact that at least part of the catalytically-active component is supported on the carrier can be confirmed by analyzing the first catalyst layer 20 using, for example, scanning electron microscopy-energy dispersive X-ray spectroscopy (SEM-EDX), to confirm the fact that at least part of the catalytically-active component and the carrier are present in the same region.

The first catalyst layer 20 may contain one or more components other than Rh and the Ce-Zr-Al-based complex oxide of the present invention (which may hereinafter be referred to as "other component(s)"). However, when the proportion of components other than the Ce-Zr-Al-based complex oxide to all components other than Rh in the first catalyst layer 20 is increased, under a high-temperature environment, a difference in the degree of thermal expansion and thermal contraction between the Ce-Zr-Al-based complex oxide and the components other than the Ce-Zr-Al-based complex causes burial of Rh, sintering of Rh, and the like. As a result, the exhaust gas purification performance of Rh is decreased after exposure to a high-temperature environment.

Accordingly, in the present invention, the content of the Ce-Zr-Al-based complex oxide in the first catalyst layer 20 is adjusted to suppress the decrease in the exhaust gas purification performance of Rh (particularly, suppression of the decrease in the exhaust gas purification performance of Rh after exposure to a high-temperature environment). Specifically, the content of the Ce-Zr-Al-based complex oxide of the present invention in the first catalyst layer 20 is preferably 70% by mass or more, more preferably 75% by mass or more, still more preferably 80% by mass or more, and still more preferably 90% by mass or more, based on the total mass of all components other than Rh in the first catalyst layer 20. The upper limit is 100% by mass.

In the case where the composition of raw materials used for forming the first catalyst layer 20 is known, the content of the Ce-Zr-Al-based complex oxide of the present invention in the first catalyst layer 20 can be determined from the composition of the raw materials used for forming the first catalyst layer 20.

In the case where the composition of raw materials used for forming the first catalyst layer 20 is not known, the content of the Ce-Zr-Al-based complex oxide of the present invention in the first catalyst layer 20 can be determined by a conventional method such as inductively coupled plasma atomic emission spectroscopy (ICP), X-ray fluorescence spectroscopy (XRF), or scanning electron microscopy-energy dispersive X-ray spectroscopy (SEM-EDX). A specific example is as described below.

(A) Elemental analysis is performed on a sample obtained from the first catalyst layer 20 by a conventional method such as ICP, XRF, or SEM-EDX, to identify the types of constituent elements in the entire sample and to determine the content (% by mass) of each identified element.

(B) Elemental mapping is performed on a sample obtained from the first catalyst layer 20 by a conventional method such as SEM-EDX, to identify the types of particles contained in the sample (e.g., a Ce-Zr-Al-based complex oxide particle, an Al-based oxide particle, and the like).

(C) For each type of particle, elemental analysis by SEM-EDX is performed on a plurality of arbitrarily selected particles (e.g., 50 particles) to identify the types of constituent elements of the particles and to determine the content (% by mass) of each identified element. For each type of particle, the average value of the content (% by mass) of each element is determined.

(D) The content (% by mass) of each type of particle in the sample is calculated by drawing up and solving equations representing the relationship among the content (% by mass) of each element in the sample, the content (% by mass) of each element in each type of particle, and the content (% by mass) of each type of particle in the sample. The calculated value is defined as the content (% by mass) of each type of particle in the first catalyst layer 20.

The first catalyst layer 20 may contain one or more binders. This can prevent detachment of the first catalyst layer 20. The binder is not particularly limited as long as it is an inorganic oxide other than the Ce-Zr-Al-based complex oxide. The binder can be selected from inorganic binders such as alumina, zirconia, titania, silica, ceria, and yttria. In the case where the first catalyst layer 20 contains the binder, from the viewpoint of more effectively achieving both suppression of the decrease in the exhaust gas purification performance of Rh (particularly, suppression of the decrease in the exhaust gas purification performance of Rh after exposure to a high-temperature environment) and prevention of the detachment of the first catalyst layer 20, the content of the binder in the first catalyst layer 20 is preferably 0.5% by mass or more and 10% by mass or less, and more preferably 1% by mass or more and 8% by mass or less, based on the total mass of all components other than Rh in the first catalyst layer 20. The expression "the content of the binder in the first catalyst layer 20" refers to, in the case where the first catalyst layer 20 contains a single binder, the content of the single binder, and in the case where the first catalyst layer 20 contains multiple binders, the total content of the multiple binders.

The first catalyst layer 20 may contain one or more carriers other than the Ce-Zr-Al-based complex oxide of the present invention (which may hereinafter be referred to as "other carrier(s)"). In the case where the first catalyst layer 20 contains the other carrier(s), at least part of the catalytically-active component (e.g., Rh) may be supported on the other carrier(s).

From the viewpoint of more effectively achieving suppression of the decrease in the exhaust gas purification performance of Rh (particularly, suppression of the decrease in the exhaust gas purification performance of Rh after exposure to a high-temperature environment), the content of the other carrier(s) in the first catalyst layer 20 is preferably 28% by mass or less, more preferably 25% by mass or less, still more preferably 20% by mass or less, and still more preferably 10% by mass or less, based on the total mass of all components other than Rh in the first catalyst layer 20. The lower limit is zero. It is preferable that the content of the other carrier(s) in the first catalyst layer 20 is as small as possible. The expression "the content of the other carrier(s) in the first catalyst layer 20" refers to, in the case where the first catalyst layer 20 contains a single other carrier, the content of the single other carrier, and in the case where the first catalyst layer 20 contains multiple other carriers, the total content of the multiple other carriers.

The content of the other carrier(s) in the first catalyst layer 20 may be, for example, 1% by mass or more, 3% by mass or more, or 5% by mass or more, based on the total mass of all components other than Rh in the first catalyst layer 20. Each of these lower limits may be combined with any of the aforementioned upper limits.

The method for determining the content of the other carrier(s) in the first catalyst layer 20 is the same as the method for determining the content of the Ce-Zr-Al-based complex oxide of the present invention in the first catalyst layer 20.

The other carrier(s) can be selected from inorganic oxides. The inorganic oxide is, for example, in particulate form. From the viewpoint of improving the supportability for the catalytically-active component, the inorganic oxide is preferably porous. The inorganic oxide may or may not have oxygen storage capacity. In the present specification, an inorganic oxide having oxygen storage capacity may be referred to as "OSC material".

Examples of the inorganic oxide include an Al-based oxide, a Ce-based oxide, a Ce-Zr-based complex oxide, a Ce-Zr-Al-based complex oxide other than the Ce-Zr-Al-based complex oxide of the present invention, an oxide of a rare earth element other than Ce (e.g., $Y_2O_3$), an oxide of an alkaline earth metal element (e.g., MgO, CaO, SrO, or BaO), $ZrO_2$, $SiO_2$, $TiO_2$, NiO, and the like.

In one embodiment, the first catalyst layer 20 contains an Al-based oxide in addition to the Ce-Zr-Al-based complex oxide of the present invention.

In one embodiment, the Al-based oxide contains Zr. In another embodiment, the Al-based oxide contains one or more rare earth elements. In yet another embodiment, the Al-based oxide contains Zr and one or more rare earth elements. The description with respect to these embodiments is as described above.

< Second catalyst layer >

Hereinafter, the second catalyst layer 30 will be described.

As shown in Figures 3 and 4, the second catalyst layer 30 is provided on the surface on the cell 13 side of the partition wall 12. The expression "the surface on the cell 13 side of the partition wall 12" refers to the outer surface of the partition wall 12, the outer surface extending in the exhaust gas flow direction X. The second catalyst layer 30 may be provided directly on the surface on the cell 13 side of the partition wall 12, or may be provided on the surface on the cell 13 side of the partition wall 12 via another layer. Usually, the second catalyst layer 30 is provided directly on the surface on the cell 13 side of the partition wall 12.

The second catalyst layer 30 may be composed of a structure rising from the surface on the cell 13 side of the partition wall 12 toward the cell 13 side (hereinafter referred to as "rising structure"), or may be composed of a structure present inside the partition wall 12 (hereinafter referred to as "internal structure"), or may have both the rising structure and the internal structure. The expression "the second catalyst layer 30 provided on the substrate 10" encompasses an embodiment wherein the second catalyst layer 30 is composed of the rising structure, an embodiment wherein the second catalyst layer 30 is composed of the internal structure, and an embodiment wherein the second catalyst layer 30 has both the rising structure and the internal structure.

As shown in Figure 4, the second catalyst layer 30 extends along the exhaust gas flow direction X from the end on the exhaust gas inflow side of the partition wall 12 to the end on the exhaust gas outflow side of the partition wall 12. The second catalyst layer 30 may extend from the end on the exhaust gas inflow side of the partition wall 12 along the exhaust gas flow direction X so as not to reach the end on the exhaust gas outflow side of the partition wall 12, or may extend from the end on the exhaust gas outflow side of the partition wall 12 along the direction opposite to the exhaust gas flow direction X so as not to reach the end on the exhaust gas inflow side of the partition wall 12.

From the viewpoint of balancing the exhaust gas purification performance and the cost, the mass (mass after calcining) of the second catalyst layer 30 per unit volume of the portion of the substrate 10 provided with the second catalyst layer 30 is preferably 20 g/L or more and 200 g/L or less, more preferably 30 g/L or more and 150 g/L or less, still more preferably 40 g/L or more and 120 g/L or less, and still more preferably 50 g/L or more and 100 g/L or less. The mass of the second catalyst layer 30 per unit volume of the portion of the substrate 10 provided with the second catalyst layer 30 is calculated from the formula: (Mass of second catalyst layer 30) / ((Volume of substrate 10) $\times$ (Average length $L_{30}$ of second catalyst layer 30 / Length $L_{10}$ of substrate 10)). In the present specification, the term "length" refers to the dimension in the axial direction of the substrate 10, unless otherwise defined.

The above description with respect to the mass of the first catalyst layer 20 is also applied to the mass of the second catalyst layer 30. Upon application, the "first catalyst layer 20" is replaced with the "second catalyst layer 30".

The above description with respect to the method for measuring the average length $L_{20}$ of the first catalyst layer 20 is also applied to the method for measuring the average length $L_{30}$ of the second catalyst layer 30. Upon application, the "first catalyst layer 20" and the "average length $L_{20}$" are replaced with the "second catalyst layer 30" and the "average length $L_{30}$", respectively.

From the viewpoint of improving the exhaust gas purification performance, it is preferable that the second catalyst layer 30 contains either Pd or Pt, or both Pd and Pt. When the first catalyst layer 20 is provided on the upside of the second catalyst layer 30, phosphorus poisoning of either Pd or Pt, or both Pd and Pt contained in the second catalyst layer 30 can be suppressed.

Pd contained in the second catalyst layer 30 is in the form capable of functioning as a catalytically-active component, for example, in the form of a catalytically-active component containing Pd, such as metal Pd, an alloy containing Pd, or a compound containing Pd (e.g., an oxide of Pd). Pt contained in the second catalyst layer 30 is in the form capable of functioning as a catalytically-active component, for example, in the form of a catalytically-active component containing Pt, such as metal Pt, an alloy containing Pt, or a compound containing Pt (e.g., an oxide of Pt). The catalytically-active component containing Pd and the catalytically-active component containing Pt are each, for example, in particulate form.

From the viewpoint of balancing the exhaust gas purification performance and the cost, the content of either Pd or Pt, or both Pd and Pt in terms of metal in the second catalyst layer 30 is preferably 0.07% by mass or more and 10% by mass or less, more preferably 0.3% by mass or more and 6% by mass or less, and still more preferably 0.7% by mass or more and 4% by mass or less, based on the mass of the second catalyst layer 30. The expression "the content of either Pd or Pt, or both Pd and Pt in terms of metal in the second catalyst layer 30" refers to, in the case where the second catalyst layer 30 contains either Pd or Pt, the content of either Pd or Pt in terms of metal, and in the case where the second catalyst layer 30 contains both Pd and Pt, the total content of both Pd and Pt in terms of metal.

The content of each of Pd and Pt in terms of metal in the second catalyst layer 30 can be determined in the same manner as the content of each metal element in terms of metal in the first catalyst layer 20 described above.

From the viewpoint of improving the exhaust gas purification performance, it is preferable that the second catalyst layer 30 contains one or more carriers, and that at least part of the catalytically-active component is supported on the one or more carriers. The meaning of the expression "at least part of the catalytically-active component is supported on the carrier" and the method of confirming the fact that at least part of the catalytically-active component is supported on the carrier are the same as described above.

The one or more carriers can be selected from, for example, inorganic oxides. The inorganic oxide is, for example, in particulate form. From the viewpoint of improving the supportability for the catalytically-active component, the inorganic oxide is preferably porous. The inorganic oxide may or may not have oxygen storage capacity.

Examples of the inorganic oxide include an Al-based oxide, a Ce-based oxide, a Ce-Zr-based complex oxide, a Ce-Zr-Al-based complex oxide, an oxide of a rare earth element other than Ce (e.g., $Y_2O_3$), an oxide of an alkaline earth metal element (e.g., MgO, CaO, SrO, or BaO), $ZrO_2$, $SiO_2$, $TiO_2$, NiO, and the like.

The second catalyst layer 30 may contain a binder. The binder can be selected from inorganic binders such as alumina, zirconia, titania, silica, ceria, and yttria.

< Production method of exhaust gas purification catalyst >

The exhaust gas purification catalyst 1 can be produced by forming the second catalyst layer 30 on the substrate 10, and then forming the first catalyst layer 20 on the upside of the second catalyst layer 30.

The second catalyst layer 30 can be formed by mixing a supply source of a noble metal element (e.g., a Pd salt) and (an)other component(s) (e.g., an inorganic oxide, a binder, and/or a solvent) to prepare a slurry for the second catalyst layer, coating the partition wall 12 of the substrate 10 with the slurry for the second catalyst layer, drying the resulting substrate, and calcining the resulting substrate.

The first catalyst layer 20 can be formed by mixing a supply source of a noble metal element (e.g., a Rh salt) and (an)other component(s) (e.g., an Ce-Zr-Al-based complex oxide, optionally (an)other inorganic oxide(s), a binder, and/or a solvent) to prepare a slurry for the first catalyst layer, coating the second catalyst layer 30 with the slurry for the first catalyst layer, drying the resulting substrate, and calcining the resulting substrate.

Examples of the binder include metal oxide sols such as alumina sol, zirconia sol, titania sol, silica sol, ceria sol, and yttria sol. Examples of the solvent include water and organic solvents.

The drying temperature is, for example, 60°C or more and 150°C or less, and the drying time is, for example, 0.1 hours or more and 1 hour or less. The calcination temperature is, for example, 300°C or more and 700°C or less, and the calcination time is, for example, 1 hour or more and 10 hours or less. The calcination can be carried out, for example, in an air atmosphere.

**EXAMPLES**

Hereinafter, the present invention will be described in detail with reference to Examples. However, the present invention is not limited to the Examples.

An Al-Zr-based oxide was prepared and used in Example 2 and in Comparative Examples 1 to 3. Hereinafter, the Al-Zr-based oxide may be referred to as "AZ".

The composition of the Al-Zr-based oxide was as follows:

the content of Al in terms of $Al_2O_3$: 50% by mass
the content of Zr in terms of $ZrO_2$: 40% by mass
the content of rare earth element(s) other than Ce in terms of oxide: 10% by mass

Ce-Zr-Al-based complex oxides (I) to (V) were prepared. The Ce-Zr-Al-based complex oxide (II) was used in Example 1, Example 2, Comparative Example 1, and Comparative Example 2; the Ce-Zr-Al-based complex oxide (I) was used in Example 3; the Ce-Zr-Al-based complex oxide (III) was used in Example 4; the Ce-Zr-Al-based complex oxide (IV) was used in Example 5; and the Ce-Zr-Al-based complex oxide (V) was used in Comparative Example 4. In Comparative Example 3, none of the Ce-Zr-Al-based complex oxides was used. Hereinafter, the Ce-Zr-Al-based complex oxide may be referred to as "CZA".

The composition of the Ce-Zr-Al-based complex oxide (I) was as follows:

the content of Ce in terms of $CeO_2$: 3% by mass
the content of Zr in terms of $ZrO_2$: 50% by mass
the content of Al in terms of $Al_2O_3$: 42% by mass
the content of rare earth element(s) other than Ce in terms of oxide: 5% by mass

The composition of the Ce-Zr-Al-based complex oxide (II) was as follows:

the content of Ce in terms of $CeO_2$: 10% by mass
the content of Zr in terms of $ZrO_2$: 50% by mass
the content of Al in terms of $Al_2O_3$: 35% by mass
the content of rare earth element(s) other than Ce in terms of oxide: 5% by mass

The composition of the Ce-Zr-Al-based complex oxide (III) was as follows:

the content of Ce in terms of $CeO_2$: 19% by mass
the content of Zr in terms of $ZrO_2$: 50% by mass
the content of Al in terms of $Al_2O_3$: 26% by mass
the content of rare earth element(s) other than Ce in terms of oxide: 5% by mass

The composition of the Ce-Zr-Al-based complex oxide (IV) was as follows:

the content of Ce in terms of $CeO_2$: 22.5% by mass
the content of Zr in terms of $ZrO_2$: 50% by mass
the content of Al in terms of $Al_2O_3$: 22.5% by mass
the content of rare earth element(s) other than Ce in terms of oxide: 5% by mass

The composition of the Ce-Zr-Al-based complex oxide (V) was as follows:

the content of Ce in terms of $CeO_2$: 38.5% by mass
the content of Zr in terms of $ZrO_2$: 50% by mass
the content of Al in terms of $Al_2O_3$: 6.5% by mass
the content of rare earth element(s) other than Ce in terms of oxide: 5% by mass

The compositional characteristics of the Ce-Zr-Al-based complex oxides (I) to (V) are shown in Table 1.

[Table 1]

Table 1

| CZA | (a) Content of Ce in terms of metal [% by mass] | (b) Content of Zr in terms of metal [% by mass] | (c) Content of Al in terms of metal [% by mass] | (a) / (b) | (c) / ((a) + (b)) |
|---|---|---|---|---|---|
| (I) | 2.4 | 37.0 | 22.2 | 0.07 | 0.56 |
| (II) | 8.1 | 37.0 | 18.5 | 0.22 | 0.41 |
| (III) | 15.5 | 37.0 | 13.8 | 0.42 | 0.26 |
| (IV) | 18.3 | 37.0 | 11.9 | 0.50 | 0.22 |
| (V) | 31.3 | 37.0 | 3.4 | 0.85 | 0.05 |

**[Example 1]**

(1) Formation of lower layer

To a mixing vessel, an aqueous solution of palladium nitrate, an OSC material, an alumina material, barium sulfate, an alumina binder, and water were added, mixed, and stirred to prepare a slurry for lower layer formation. A flow-through type substrate was dipped in the slurry for lower layer formation. The flow-through type substrate coated with the slurry for lower layer formation was dried at 150°C for 0.5 hours using a dryer, and subsequently calcined at 500°C for 1 hour using an electric furnace to form a lower layer on the flow-through type substrate.
The mass of the lower layer per unit volume of the portion of the flow-through type substrate provided with the lower layer was 122 g/L. The mass of Pd in the lower layer per unit volume of the portion of the flow-through type substrate provided with the lower layer was 2 g/L. The total mass of all components other than Pd in the lower layer per unit volume of the portion of the flow-through type substrate provided with the lower layer was 120 g/L. The content of each component in the slurry for lower layer formation was adjusted such that the content of the OSC material was 45% by mass, the content of the alumina material was 45% by mass, the content of barium sulfate was 5% by mass, and the content of the alumina binder was 5% by mass, based on the total mass (100% by mass) of the components other than Pd in the lower layer.

(2) Formation of upper layer

To a mixing vessel, an aqueous solution of rhodium nitrate, the Ce-Zr-Al-based complex oxide (II), an alumina binder, and water were added, mixed, and stirred to prepare a slurry for upper layer formation. The flow-through type substrate provided with the lower layer was dipped in the slurry for upper layer formation. The flow-through type substrate coated with the slurry for upper layer formation was dried at 150°C for 0.5 hours using a dryer, and then calcined at 500°C for 1 hour using an electric furnace to form an upper layer on the lower layer. In this manner, an exhaust gas purification catalyst of Example 1 was obtained.
The total mass of all components other than Rh in the upper layer per unit volume of the portion of the flow-through type substrate provided with the upper layer was adjusted to 100 g/L. The mass of Rh in the upper layer per unit volume of the portion of the flow-through type substrate provided with the upper layer was adjusted to 0.5 g/L.
The contents of components in the slurry for upper layer formation were adjusted such that the content of the Ce-Zr-Al-based complex oxide (II) in the upper layer was 95% by mass, and the content of the alumina binder in the upper layer was 5% by mass, based on the total mass (100% by mass) of all components other than Rh in the upper layer. Since the total mass of all components other than Rh in the upper layer per unit volume of the portion of the flow-through type substrate provided with the upper layer was 100 g/L, the mass of the Ce-Zr-Al-based complex oxide (II) in the upper layer per unit volume of the portion of the flow-through type substrate provided with the upper layer was 95 g/L, and the mass of the alumina binder in the upper layer per unit volume of the portion of the flow-through type substrate provided with the upper layer was 5 g/L.

**< Example 2 >**

(1) Formation of lower layer

In the same manner as in Example 1, a lower layer was formed on a flow-through type substrate.

(2) Formation of upper layer

To a mixing vessel, an aqueous solution of rhodium nitrate, the Ce-Zr-Al-based complex oxide (II), the Al-Zr-based oxide, an alumina binder, and water were added, mixed, and stirred to prepare a slurry for upper layer formation. The flow-through type substrate provided with the lower layer was dipped in the slurry for upper layer formation. The flow-through type substrate coated with the slurry for upper layer formation was dried at 150°C for 0.5 hours using a dryer, and then calcined at 500°C for 1 hour using an electric furnace to form an upper layer on the lower layer. In this manner, an exhaust gas purification catalyst of Example 2 was obtained.
The total mass of all components other than Rh in the upper layer per unit volume of the portion of the flow-through type substrate provided with the upper layer was adjusted to 100 g/L. The mass of Rh in the upper layer per unit volume of the portion of the flow-through type substrate provided with the upper layer was adjusted to 0.5 g/L.
The contents of components in the slurry for upper layer formation were adjusted such that the content of the Ce-Zr-Al-based complex oxide (II) in the upper layer was 70% by mass, the content of the Al-Zr-based oxide in the upper layer was 25% by mass, and the content of the alumina binder in the upper layer was 5% by mass, based on the total mass (100% by mass) of all components other than Rh in the upper layer. Since the total mass of all components other than Rh in the upper layer per unit volume of the portion of the flow-through type substrate provided with the upper layer was 100 g/L, the mass of the Ce-Zr-Al-based complex oxide (II) in the upper layer per unit volume of the portion of the flow-through type substrate provided with the upper layer was 70 g/L, the mass of the Al-Zr-based oxide in the upper layer per unit volume of the portion of the flow-through type substrate provided with the upper layer was 25 g/L, and the mass of the alumina binder in the upper layer per unit volume of the portion of the flow-through type substrate provided with the upper layer was 5 g/L.

**< Example 3 >**

(1) Formation of lower layer

In the same manner as in Example 1, a lower layer was formed on a flow-through type substrate.

(2) Formation of upper layer

In the same manner as in Example 1, an upper layer was formed on the lower layer to obtain an exhaust gas purification catalyst of Example 3, except that the Ce-Zr-Al-based complex oxide (I) was used instead of the Ce-Zr-Al-based complex oxide (II).

**< Example 4 >**

(1) Formation of lower layer

In the same manner as in Example 1, a lower layer was formed on a flow-through type substrate.

(2) Formation of upper layer

In the same manner as in Example 1, an upper layer was formed on the lower layer to obtain an exhaust gas purification catalyst of Example 4, except that the Ce-Zr-Al-based complex oxide (III) was used instead of the Ce-Zr-Al-based complex oxide (II).

**< Example 5 >**

(1) Formation of lower layer

In the same manner as in Example 1, a lower layer was formed on a flow-through type substrate.

(2) Formation of upper layer

In the same manner as in Example 1, an upper layer was formed on the lower layer to obtain an exhaust gas purification catalyst of Example 5, except that the Ce-Zr-Al-based complex oxide (IV) was used instead of the Ce-Zr-Al-based complex oxide (II).

< **Comparative Example 1** >

(1) Formation of lower layer

In the same manner as in Example 1, a lower layer was formed on a flow-through type substrate.

(2) Formation of upper layer

In the same manner as in Example 2, an upper layer was formed on the lower layer to obtain an exhaust gas purification catalyst of Comparative Example 1, except that the contents of components in the slurry for upper layer formation were adjusted such that the content of the Ce-Zr-Al-based complex oxide (II) in the upper layer was 50% by mass, the content of the Al-Zr-based oxide in the upper layer was 45% by mass, and the content of the alumina binder in the upper layer was 5% by mass, based on the total mass (100% by mass) of all components other than Rh in the upper layer.
Since the total mass of all components other than Rh in the upper layer per unit volume of the portion of the flow-through type substrate provided with the upper layer was 100 g/L, the mass of the Ce-Zr-Al-based complex oxide (II) in the upper layer per unit volume of the portion of the flow-through type substrate provided with the upper layer was 50 g/L, the mass of the Al-Zr-based oxide in the upper layer per unit volume of the portion of the flow-through type substrate provided with the upper layer was 45 g/L, and the mass of the alumina binder in the upper layer per unit volume of the portion of the flow-through type substrate provided with the upper layer was 5 g/L.

< **Comparative Example 2** >

(1) Formation of lower layer

In the same manner as in Example 1, a lower layer was formed on a flow-through type substrate.

(2) Formation of upper layer

In the same manner as in Example 2, an upper layer was formed on the lower layer to obtain an exhaust gas purification catalyst of Comparative Example 2, except that the contents of components in the slurry for upper layer formation were adjusted such that the content of the Ce-Zr-Al-based complex oxide (II) in the upper layer was 25% by mass, the content of the Al-Zr-based oxide in the upper layer was 70% by mass, and the content of the alumina binder in the upper layer was 5% by mass, based on the total mass (100% by mass) of all components other than Rh in the upper layer.
Since the total mass of all components other than Rh in the upper layer per unit volume of the portion of the flow-through type substrate provided with the upper layer was 100 g/L, the mass of the Ce-Zr-Al-based complex oxide (II) in the upper layer per unit volume of the portion of the flow-through type substrate provided with the upper layer was 25 g/L, the mass of the Al-Zr-based oxide in the upper layer per unit volume of the portion of the flow-through type substrate provided with the upper layer was 70 g/L, and the mass of the alumina binder in the upper layer per unit volume of the portion of the flow-through type substrate provided with the upper layer was 5 g/L.

< **Comparative Example 3** >

(1) Formation of lower layer

In the same manner as in Example 1, a lower layer was formed on a flow-through type substrate.

(2) Formation of upper layer

In the same manner as in Example 2, an upper layer was formed on the lower layer to obtain an exhaust gas purification catalyst of Comparative Example 3, except that the contents of components in the slurry for upper layer formation were adjusted such that the content of the Al-Zr-based oxide in the upper layer was 95% by mass, and the content of the alumina binder in the upper layer was 5% by mass, based on the total mass (100% by mass) of all components other than Rh in the upper layer. In Comparative Example 3, none of the Ce-Zr-Al-based complex oxides was used.

Since the total mass of all components other than Rh in the upper layer per unit volume of the portion of the flow-through type substrate provided with the upper layer was 100 g/L, the mass of the Al-Zr-based oxide in the upper layer per unit volume of the portion of the flow-through type substrate provided with the upper layer was 95 g/L, and the mass of the alumina binder in the upper layer per unit volume of the portion of the flow-through type substrate provided with the upper layer was 5 g/L.

< **Comparative Example 4** >

(1) Formation of lower layer

In the same manner as in Example 1, a lower layer was formed on a flow-through type substrate.

(2) Formation of upper layer

In the same manner as in Example 1, the upper layer was formed on the lower layer to obtain the exhaust gas purification catalyst of Comparative Example 4, except that the Ce-Zr-Al-based complex oxide (V) was used instead of the Ce-Zr-Al-based complex oxide (II).

< **Test Example 1** >

(1) Aging treatment

Each exhaust gas purification catalyst was subjected to the following aging conditions as an aging treatment simulating driving for 50,000 to 100,000 kilometers. Specifically, each exhaust gas purification catalyst was maintained at the following temperature for the following period of time while being in contact with exhaust gas discharged from an engine operated under the following conditions.

(Aging conditions)

Engine used for aging test: NA 2L gasoline engine for a passenger vehicle
Gasoline used: commercially available regular gasoline
Temperature and Time: 100 hours at 950°C

(2) Evaluation of OSC

An OSC measurement of each exhaust gas purification catalyst after the aging treatment was carried out using the CO pulse method with a temperature-programmed reduction apparatus (TPR apparatus) manufactured by Hemmi Slide Rule Co., Ltd. In the OSC measurement, each exhaust gas purification catalyst after the aging treatment was subjected to a pretreatment in which it was heated to 800°C under a He flow and maintained at that temperature for 40 minutes, and then cooled to 300°C. While maintaining the temperature at 300°C, $O_2$ gas was injected in 4 pulses to perform an oxidation treatment. Then, the $O_2$ gas was stopped, and a test gas containing CO was injected in 10 pulses. Thereafter, the OSC amount ($\mu$mol/g) of each exhaust gas purification catalyst at 300°C was measured based on the total amount of CO gas consumed, using an infrared gas concentration measuring apparatus (CGT-7000, manufactured by Shimadzu Corporation). The "OSC amount ($\mu$mol/g) of each exhaust gas purification catalyst at 300°C" refers to the OSC amount per unit mass of the catalyst layers (the lower layer and the upper layer) of each exhaust gas purification catalyst. The test gas was prepared by diluting He gas with 25% by volume of CO gas. The percentage of the OSC amount ($\mu$mol/g) of each exhaust gas purification catalyst relative to the OSC amount ($\mu$mol/g) of the exhaust gas purification catalyst of Example 1 was calculated and used as the relative OSC amount of each exhaust gas purification catalyst. The results are shown in Table 2.

The relative OSC amount of the exhaust gas purification catalyst of Comparative Example 3 (since the upper layer in Comparative Example 3 contains no OSC material such as a Ce-Zr-Al-based complex oxide, the OSC amount in Comparative Example 3 substantially corresponds to the OSC amount attributable solely to the lower layer) was subtracted from the relative OSC amount of each exhaust gas purification catalyst. The resulting value was divided by the mass of the Ce-Zr-Al-based complex oxide in the upper layer per unit volume of the portion of the flow-through type substrate provided with the upper layer, and the resulting value was used as an index representing the OSC amount per unit mass of the Ce-Zr-Al-based complex oxide. The results are shown in Table 2.

(3) Evaluation of exhaust gas purification performance

Each exhaust gas purification catalyst after the aging treatment was placed in an exhaust gas path. While an exhaust model gas (CO: 0.50%, $H_2$: 0.17%, $O_2$: 0.50%, NO: 400 ppm, $C_3H_6$: 1180 ppm, $CO_2$: 14%, $H_2O$: 10%, and $N_2$: balance) was allowed to flow through at a space velocity of 100000/h, the temperature of the supplied gas was increased at an increasing temperature of 20°C/minute to 500°C, the purification rate of nitrogen oxides (NOx) in the emitted gas was continuously measured, and the temperature at which the purification rate of nitrogen oxides (NOx) reached 50% (light-off temperature T50) (°C) was determined. The light-off temperature T50 was determined during the temperature was rising. The results are shown in Table 2.

[Table 2]

Table 2

| | Characteristics of CZA | | | All components other than Rh in upper layer | | |
|---|---|---|---|---|---|---|
| | Type | (a) / (b) | (c) / ((a) + (b)) | Content of CZA [% by mass] | Content of AZ [% by mass] | Content of binder [% by mass] |
| Example 1 | (II) | 0.22 | 0.41 | 95 | - | 5 |
| Example 2 | (II) | 0.22 | 0.41 | 70 | 25 | 5 |
| Comparative Example 1 | (II) | 0.22 | 0.41 | 50 | 45 | 5 |
| Comparative Example 2 | (II) | 0.22 | 0.41 | 25 | 70 | 5 |
| Comparative Example 3 | - | - | - | - | 95 | 5 |
| Example 3 | (I) | 0.07 | 0.56 | 95 | - | 5 |
| Example 4 | (III) | 0.42 | 0.26 | 95 | - | 5 |
| Example 5 | (IV) | 0.50 | 0.22 | 95 | - | 5 |
| Comparative Example 4 | (V) | 0.85 | 0.05 | 95 | - | 5 |

(a) represents the content of Ce in terms of metal in CZA (% by mass), (b) represents the content of Zr in terms of metal in CZA (% by mass), and (c) represents the content of Al in terms of metal in CZA (% by mass).

[Table 2 (Continued)]

Table 2 (Continued)

| | Relative OSC amount | Light-off temperature T50 | Index representing OSC per unit mass of CZA |
|---|---|---|---|
| Example 1 | 100% | 310°C | 0.32 |
| Example 2 | 90% | 325°C | 0.29 |
| Comparative Example 1 | 75% | 370°C | 0.10 |
| Comparative Example 2 | 72% | 365°C | 0.08 |

(continued)

|  | Relative OSC amount | Light-off temperature T50 | Index representing OSC per unit mass of CZA |
|---|---|---|---|
| Comparative Example 3 | 70% | 305°C | - |
| Example 3 | 85% | 310°C | 0.16 |
| Example 4 | 110% | 315°C | 0.42 |
| Example 5 | 125% | 320°C | 0.58 |
| Comparative Example 4 | 140% | 375°C | 0.74 |

As shown in Table 2, both improvement of the oxygen storage capacity of the Ce-Zr-Al-based complex oxide abd suppression of the decrease in the exhaust gas purification performance of Rh (particularly, suppression of the decrease in the exhaust gas purification performance of Rh after exposure to a high-temperature environment) were achieved in Examples 1 to 5, which satisfy the following conditions:

[Condition 1] the content of the Ce-Zr-Al-based complex oxide is 70% by mass or more, based on the total mass of all components other than Rh in the upper layer; and
[Condition 2] the mass ratio of the content of Ce in terms of metal in the Ce-Zr-Al-based complex oxide to the content of Zr in terms of metal in the Ce-Zr-Al-based complex oxide is 0.03 or more and 0.50 or less.

In contrast, neither improvement of the oxygen storage capacity of the Ce-Zr-Al-based complex oxide nor suppression of the decrease in the exhaust gas purification performance of Rh (particularly, suppression of the decrease in the exhaust gas purification performance of Rh after exposure to a high-temperature environment) was achieved in Comparative Examples 1 and 2, which satisfy Condition 2 but do not satisfy Condition 1. In Comparative Example 4, which satisfies Condition 1 but does not satisfy Condition 2, improvement of the oxygen storage capacity of the Ce-Zr-Al-based complex oxide was achieved, but suppression of the decrease in the exhaust gas purification performance of Rh (particularly, suppression of the decrease in the exhaust gas purification performance of Rh after exposure to a high-temperature environment) was not achieved. In Comparative Example 3, which satisfies neither Condition 1 nor Condition 2, the OSC amount was insufficient.

DESCRIPTION OF REFERENCE SIGNS

1      Exhaust gas purification catalyst
10     Substrate
11     Tubular member
12     Partition wall
13     Cell
20     First catalyst layer
30     Second catalyst layer

**Claims**

1.  An exhaust gas purification catalyst, comprising a substrate and a first catalyst layer provided on the substrate, wherein the first catalyst layer comprises Rh and a complex oxide comprising Ce, Zr, and Al, wherein a content of the complex oxide is 70% by mass or more, based on a total mass of all components other than Rh in the first catalyst layer, and wherein a mass ratio of a content of Ce in terms of metal in the complex oxide to a content of Zr in terms of metal in the complex oxide is 0.03 or more and 0.50 or less.

2.  The exhaust gas purification catalyst as claimed in claim 1, wherein a mass ratio of a content of Al in terms of metal in the complex oxide to a total content of Ce and Zr in terms of metal in the complex oxide is 0.10 or more and 10 or less.

3.  The exhaust gas purification catalyst as claimed in claim 1, wherein a total content of Ce, Zr, and Al in terms of oxide in the complex oxide is 75% by mass or more, based on a mass of the complex oxide.

4. The exhaust gas purification catalyst as claimed in claim 3, wherein a content of a rare earth element other than Ce in terms of oxide in the complex oxide is 25% by mass or less, based on the mass of the complex oxide.

5. The exhaust gas purification catalyst as claimed in claim 4, wherein the rare earth element other than Ce is selected from La, Y, Pr, and Nd.

6. The exhaust gas purification catalyst as claimed in claim 1, wherein the first catalyst layer comprises an Al-based oxide.

7. The exhaust gas purification catalyst as claimed in claim 1, wherein the first catalyst layer comprises a binder.

8. The exhaust gas purification catalyst as claimed in claim 7, wherein the binder is an inorganic oxide other than a Ce-Zr-Al-based complex oxide.

9. The exhaust gas purification catalyst as claimed in claim 1, wherein the exhaust gas purification catalyst comprises a second catalyst layer provided on the substrate, wherein the first catalyst layer is provided on an upside of the second catalyst layer, and wherein the second catalyst layer comprises either Pd or Pt, or both Pd and Pt.

[Figure 1]

[Figure 2]

[Figure 3]

[Figure 4]

## INTERNATIONAL SEARCH REPORT

| International application No. |
| --- |
| **PCT/JP2024/011722** |

| A. | CLASSIFICATION OF SUBJECT MATTER |
| --- | --- |

*B01J 27/053*(2006.01)i; *B01D 53/94*(2006.01)i; *F01N 3/10*(2006.01)i; *F01N 3/28*(2006.01)i
FI:   B01J27/053 A ZAB; B01D53/94 222; B01D53/94 245; B01D53/94 280; F01N3/10 A; F01N3/28 301P

According to International Patent Classification (IPC) or to both national classification and IPC

| B. | FIELDS SEARCHED |
| --- | --- |

Minimum documentation searched (classification system followed by classification symbols)

B01J27/053; B01D53/94; F01N3/10; F01N3/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); CAplus/REGISTRY (STN); Japio-GPG/FX

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2021-181070 A (TOYOTA JIDOSHA KABUSHIKI KAISHA) 25 November 2021 (2021-11-25)<br>    entire text | 1-9 |
| A | JP 2010-5591 A (TOYOTA JIDOSHA KABUSHIKI KAISHA) 14 January 2010 (2010-01-14)<br>    entire text | 1-9 |
| A | JP 2010-227804 A (TOYOTA JIDOSHA KABUSHIKI KAISHA) 14 October 2010 (2010-10-14)<br>    entire text | 1-9 |
| A | WO 2020/031508 A1 (MITSUI MINING & SMELTING CO., LTD.) 13 February 2020 (2020-02-13)<br>    entire text | 1-9 |
| A | WO 2010/109734 A1 (HONDA MOTOR CO., LTD.) 30 September 2010 (2010-09-30)<br>    entire text | 1-9 |

| ✓ Further documents are listed in the continuation of Box C. | ✓ See patent family annex. |
| --- | --- |

| \* | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 May 2024** | **04 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**EP 4 691 633 A1**

**INTERNATIONAL SEARCH REPORT**

International application No.

**PCT/JP2024/011722**

| C. | DOCUMENTS CONSIDERED TO BE RELEVANT | |
|---|---|---|
| Category* | Citation of document, with indication, where appropriate, of the relevant passages | Relevant to claim No. |
| A | JP 2012-187518 A (TOYOTA JIDOSHA KABUSHIKI KAISHA) 04 October 2012 (2012-10-04)<br>entire text | 1-9 |
| A | JP 2005-224792 A (MAZDA MOTOR CORP.) 25 August 2005 (2005-08-25)<br>entire text | 1-9 |

Form PCT/ISA/210 (second sheet) (July 2022)

28

## INTERNATIONAL SEARCH REPORT
### Information on patent family members

International application No.

**PCT/JP2024/011722**

| Patent document cited in search report | | | Publication date (day/month/year) | Patent family member(s) | | | Publication date (day/month/year) |
|---|---|---|---|---|---|---|---|
| JP | 2021-181070 | A | 25 November 2021 | (Family: none) | | | |
| JP | 2010-5591 | A | 14 January 2010 | (Family: none) | | | |
| JP | 2010-227804 | A | 14 October 2010 | (Family: none) | | | |
| WO | 2020/031508 | A1 | 13 February 2020 | (Family: none) | | | |
| WO | 2010/109734 | A1 | 30 September 2010 | EP<br>entire text | 2412437 | A1 | |
| JP | 2012-187518 | A | 04 October 2012 | WO | 2012/120349 | A1 | |
| | | | | EP | 2683467 | A1 | |
| | | | | US | 8796172 | B2 | |
| JP | 2005-224792 | A | 25 August 2005 | (Family: none) | | | |

Form PCT/ISA/210 (patent family annex) (July 2022)

**REFERENCES CITED IN THE DESCRIPTION**

**Patent documents cited in the description**

- JP 10202102 A
- JP 2017189745 A